# EUROPEAN PATENT APPLICATION

(11) **EP 2 327 756 A2**
(43) Date of publication of application: **01.06.2011**
(21) Application number: 10192820.8
(22) Date of filing: 26.11.2010
(51) Int. Cl.: C11D 3/20, C11D 7/26, C11D 11/00, C09D 7/00, C09D 9/00, C09D 11/02, C10M 105/34

(54) **Solvent composition containing at least one ester of isoamylalcohol**

(30) Priority: 26.11.2009 EP 09177273
(71) Applicant: Oleon, 9940 Ertvelde (BE)
(72) Inventor: Packet, Dirk, 1730, Asse (BE); Huybrechts, Ward, 2600, Berchem (BE); Wouters, Bart, 3600, Genk (BE)
(74) Representative: Luys, Marie-José A.H.

(57) **Abstract**

The invention relates to a solvent composition comprising an ester of isoamyl alcohol with a C8-C14 fatty acid. The isoamyl alcohol is a component selected from the group of 3-methyl-1-butanol, 2-methyl-1-butanol, a fusel oil mixture containing 3-methyl-1-butanol, 2-methyl-1-butanol or a mixture of two or more of the afore mentioned components. The invention also relates to a creep oil, an ink composition, a coating composition or an anti-corrosion agent containing such a solvent composition.

## Description

The present invention relates to a solvent composition which contains at least one ester of isoamyl alcohol.

Over the years increasing efforts have been undertaken by industry to produce products for a wide range of applications using renewable materials as starting products and employing processes which are more and more environmentally friendly. In particular, because solvents find widespread applications in industry and household, significant efforts have been undertaken to provide solvents which are made of renewable materials and which are preferably also biodegradable. The development of such solvents is demanding since, depending on the nature of the compound that needs to be dissolved, either a polar or an apolar solvent will be required. Water, one of the most commonly used solvents, is highly polar, it has a dielectric constant of 81, but because of its polarity its applicability as a solvent for large molecular weight organic compounds, is limited. Other frequently used solvents include non-polar hydrocarbon solvents with a lower dielectric constant, in particular aliphatic solvents, for example alcohols and alkanes such as n-hexane and cyclohexane, and aromatic solvents such as toluene, which usually will be more polar and have the better solvency power. Esters, ethers, ketones, amines, alcohols and halogenated hydrocarbons may have a more or less polar character, depending on the hydrocarbon chain length. The applicability of a solvent is however not only determined by its polarity, but also by its toxicity and by the circumstances in which it is to be used. In this respect and depending on the intended application, viscosity, volatility and flash point may be important properties as well. Examples of industrial solvent applications include the removal of petroleum or tar products, however the solvents used are usually toxic and not made of renewable materials, the dissolution of coatings, the production of printing inks where it is important that the ink is transported to the paper surface and adheres thereto, the use of solvents as dry cleaning fluids, stain removers and in household and cleaning products.

During and after use, solvents often end up in the environment. Discharging of solvent into the environment can be tolerated, provided accumulation of the solvent to undesirable levels can be minimised. The use of biodegradable solvents may provide a remedy for this kind of problems. There is therefore a need to new solvents, which are environmentally friendly and biodegradable, but which at the same time show good solvency properties.

US2007/0155644 to Joel Muse discloses a solvent composition which contains 20-99.9 wt. % of isoamyl lactate. 0.1-60 wt. % of a C1-C5 ester of a C16-C22 fatty acid may be included to increase the flash point of the mixture to a temperature above 60°C. Depending on the nature of the application, either the methyl or the isoamyl ester may be preferred. The solvent composition can be formulated to be partially miscible with water, to permit rinsing. Although the composition is made of renewable materials and is said to be biodegradable, it may contain up to 50 wt. % of an organic solvent. The presence of this solvent is necessary to provide sufficient solvency properties. In this respect, isoamyl lactate has been found incapable of dissolving bitumen. Examples of suitable solvents include those which are biodegradable for example mixed methyl esters of C4-C6 dibasic acids, in particular a C1-C5 ester of a C3-C10 dicarboxylic acid. However, other solvents which are not biodegradable may be incorporated as well. The composition may further contain 0-20 wt. % of a surfactant and 0-20 wt. % of a thickener. Besides the afore-mentioned disadvantages it has to be taken into account that polymerisation of the lactate complicates lactate ester production.

US6.096.699 to NTEC Versol LLC discloses a biodegradable solvent composition which provides solvency for a broad range of applications and is generally benign to human health.The composition contains 10-90 wt. % of a C1-C4 ester of a C16-C20 fatty acids, the methyl ester of a mixture of oleic an linoleic acids being particularly preferred, and 10-90 wt. % of a C1-C4 ester of lactic acid as a co-solvent, in particular the ethyl ester. The composition is liquid or a gel at 0°C and has a flash point of over 93°C. It is said to be safer than methylene chlorides as paint stripper base ingredient. It is said that the composition is suitable for use in occupied areas, paint strippers containing the solvent can be scraped off, collected, reused and rinsed off with high pressure water. However, these esters appear to have a high surface tension.

In the afore-mentioned solvent compositions often only one but not all of the components are made of renewable raw materials, and often solvency aids need to be incorporated to provide adequate solvent properties. However, not all of these solvency aids are completely made of renewable materials, and they are biodegradable to a lesser extent only.

There is thus a need to a solvent, which is made of renewable raw materials and shows adequate properties for the envisaged application.

This problem is solved according to the present invention with a solvent showing the technical features of the characterising portion of the first claim.

Thereto, the solvent according to the present invention is characterised in that the solvent composition comprises an ester of isoamyl alcohol with at least one C8-C14 fatty acid. The solvent composition may comprise an ester of isoamylalcohol with one single fatty acid selected from C8-C14 fatty acids or a mixture of two or more of those fatty acids may be used.

In a solvent based on an ester of isoamyl alcohol with at least one C8-C14 fatty acid, both the isoamyl alcohol and the fatty acids may originate from renewable materials. In particular the isoamyl alcohol may originate from bioalcohol production and the C8-C14 fatty acid may originate from vegetable fats or oils, from fractions of vegetable fats and/or oils or from mixtures of two or more of the afore mentioned compounds. Besides this, the C8-C14 fatty acid - isoamyl alcohol esters have been found to be fully biodegradable which is important from the environmental point of view, and it has been established that the C8-C14 fatty acid - isoamyl alcohol esters do not emit volatile organic compounds (VOC). The esters of the present invention further present the advantage that they show a good skin tolerance and that they are not toxic.

The inventors have observed that esters of isoamyl alcohol with at least one fatty acid selected from the group of C8-C14 fatty acid show good solvency properties and that they are suitable for use as a solvent without necessitating the use of a co-solvent, when dissolving a wide range of products where C16-C22 based esters of isoamyl alcohol would require the use of a co-solvent. Frequently used co-solvents include C1-C4 ester of lactic acid. However these are not fully made of renewable materials. Examples of applications where the solvent composition of this invention shows good solvency without necessitating the use of a co-solvent to reduce surface tension or enhance dissolution include its application as paint or varnish remover or in other words in applications as solvent for a wide variety of polar thermosetting resins, as solvent for bitumen, as degreasing agent or for the dissolution of tar. Isoamyl lactate for example has been found incapable of dissolving bitumen. In order to dissolve bitumen, often use has been made of limonene as a solvent. Although limonene is made of a renewable raw material as side product in orange juice production, it is irritating, its production process is quite costly and available amounts are limited. The solvent composition of the present invention has been found to be particularly suitable as a solvent for use in ink compositions, because of its ability to target the pigment to the surface to be printed, often paper, where the pigment remains on the paper surface while the solvent migrates into the paper.

Particularly good solvent properties have been observed with esters of isoamylalcohol with at least one fatty acid selected from the group of C8-C12 fatty acids or a mixture of two or more of these fatty acids.

The inventors have further observed that esters of isoamylalcohol with at least one C8-C14 fatty acid, in particular those with at least one C8-C12 fatty acid show a small contact angle of below 15° with surfaces such as aluminium, iron, glass which are representative for a wide variety of surfaces that are used in practise. Products with a contact angle up to 20° on the material in question are generally appreciated as being good wetting and such products are suitable for use as a solvent for dissolving foreign components present on that material (see ASTM D7334). With Teflon, which is a quite apolar material, a relatively small contact angle has been observed. It has nevertheless been observed that contact angles on Teflon for the solvent composition of this invention are usually somewhat higher, above 15°.

A small contact angle, in particular a contact angle of preferably below 20°, more preferably below 15°, in combination with a high value for the work of adhesion is indicative of good film forming properties of the ester in question. A small contact angle, in particular a contact angle of preferably below 20°, more preferably below 15°,in combination with an interfacial tension which is relatively small as well, is indicative for the good film forming properties of the esters of this invention and the ability of the esters of this invention of penetrating the interface between the afore mentioned materials and foreign components present thereon to dissolve the latter. The good values for work of adhesion in combination with the small contact angle is indicative for the fact that a thin film of the ester remains on the surface of a material after it has been contacted therewith, to provide a film which remains for some time and which provides at least a temporary protection against corrosion. Due to the small contact angle, the esters of this invention are extremely suitable for use as creep oil as well. The surface tension of the esters of the present invention comprises a polar as well as a dispersive component and therefore the esters of this invention are suitable for use as a solvent for a wide variety of materials. The solvent properties may be adapted by varying the nature of the fatty acid part of the ester as described above. The solvent properties may also be amended to some extent by varying the composition of the iso-amyl part of the ester.

Esters of isoamylalcohol with at least one C8-C14 fatty acid preferably have a Kauri-butanol value of at least about 50 and therefore they are considered to be relatively good solvents, which moreover are made of renewable materials.

It will be clear to the skilled person that the afore-mentioned properties, in particular the contact angle, the surface tension and the disperse and polar component thereof, depend on the nature of the fatty acid and iso-amyl part of the ester and that they can be adapted by varying either the fatty acid or the iso-amyl part of the ester. This can be achieved either by using a single type of fatty acids or a mixture of a two or more different fatty acids in the ester, by using saturated or unsaturated fatty acids or a certain mixture, by using branched or straight hydrocarbon chains and by varying the number of carbon atoms of the hydrocarbon chain of the fatty acid part.

The esters of this invention will usually be at least partly soluble in water. This may be important in case the ester is rinsed off using water. However to dissolve large amounts of the ester in water, the use of an emulsifier may be required. In those cases where the use of an emulsifier is advisable, it will usually be present in a concentration of 1-5 wt. %.

The isoamyl alcohol esters of the solvent of the present invention will usually have a boiling point of at least 200°C, often above 250°C, this is a particular advantage and renders the solvent composition of this invention suitable for use in closed spaces, because of the low volatility. The isoamyl alcohol esters contained in the solvent composition of the present invention will usually have a closed cup flash point of at least 150°C, often about or even above 170°C.

The isoamyl alcohol used in the ester of the present invention, may be used as a fusel oil mixture. Fusel oil is a by-product of bio ethanol production distilleries, its average composition being 7-15 % ethanol, 7-17 % of n-propanol, 10-20 % of i-butanol, 40-60 % of isoamyl alcohol and 8-15 % miscellaneous alcohols and water. N-propanol may be a mixture of 1-and 2-propanol. The fusel oil mixture may also contain furfural. The present invention thus provides an economically interesting application provided for a by product of bio ethanol production, which otherwise has only a limited number of applications. Within the scope of this invention also fusel oil with a somewhat varying composition may be suitably used, for example fusel oil containing 3-15% ethanol, 5-20 % n-propanol, 10-20% i-butanol, 40-60 % isoamyl alcohol and 5-20% miscellaneous alcohols and water. The use of fusel oil in the way it is available as a byproduct of bio ethanol production is preferred, without subjecting the fusel oil to any further purification. Thus the solvent composition of this invention may contain C8-C14 fatty acid esters of isoamylalcohol, but also of ethanol, n-propanol and i-butanol.

In the above, isoamyl alcohol will usually be a mixture of 10-30 wt. %, often 15-25 wt. %, often about 20 wt.% 2-methyl-l-butanol and 70-90 wt. %, often 75-85 wt. %, often about 80 wt. % 3-methyl-1-butanol and it may be used as this mixture in a preferred embodiment of the invention. However, also mixtures containing 5-40 wt. % of 2-methyl-1-butanol and 95-60 wt. % of 3-methyl-1-butanol may suitably be used. The composition of the isoamyl alcohol mixture may vary depending on the distillation conditions. Since the boiling points of 3-methyl-1-butanol and the 2-methyl-1-butanol only differ by 4°C, 3-methyl-1-butanol having a boiling point of about 128°C and 2-methyl-1-butanol having a boiling point of 132°C, the isoamyl alcohol mixture is sometimes referred to as single peak isoamyl alcohol. In the present invention, for the alcohol part of the ester, use can be made either of isoamylalcohol as a mixture consisting mainly of 2-methyl-1-butanol and 3-methyl-1-butanol, one of these components, or the fusel oil mixture which besides isoamyl alcohol may further contain ethanol, n-propanol, i-butanol, miscellaneous alcohols and water as described above. The person skilled in the art will be capable of selecting the appropriate raw material, taking into account the cost, the envisaged application and purity of the ester. A solvent produced from fusel oil may thus be a mixture of several esters with the alcohol part of the ester being a mixture of several components, which provide good solvency properties for a variety of organic products which may be polar, such as polycyclic aromatic hydrocarbons. A solvent produced from fusel oil may also contain esters of 2-methyl-1-butanol and/or 3-methyl-1-butanol excl usively.

The C8-C14 fatty acids used to produce the ester of this invention may originate from various sources, for example animal or vegetable fats, but they preferably originate from vegetable fats. Most preferred vegetable fats include palm kernel oil and coconut oil. If so desired fractions of these fats may be used, or the fats may be subjected to hydrogenation, if so desired followed by fractionation. If so desired mixtures of fats, hydrogenated fats and fractionated fats may be used as well. Isoamyl alcohol esters based on these vegetable fat are entirely made of natural products, which of course are fully renewable. The C8-C14 fatty acids used to produce the ester of this invention will usually mainly consist of saturated fatty acids.

Vegetable fats usually contain a mixture of fatty acids of varying chain length, and therefore the fatty acid part of the esters of the solvent composition of this invention will usually comprise a mixture of various fatty acids, although fatty acid mixtures which mainly consist of one single fatty acid and contain other fatty acids in very limited amounts may be used as well. The fatty acid composition of the fatty acid part of the esters of the present invention may vary depending a.o. on the nature of the fat used to produce the fatty acids, whether the fat has been fractionated or not, whether the fat has been subjected to hydrogenation or not, the degree of fractionation and the composition of the fractions used. For example, fatty acids which originate from palm kernel oil will mainly consist of a mixture of C12-C14 fatty acids, although C8-C10 and C16-C18 fatty acids may be present in a certain concentration as well. Upon fractionation fractions which are enriched in C8 and C12, and relatively poor in C12 and C14 fatty acids may be obtained. C11 fatty acids may for example be obtained from the cracking of ricinus oil, its ester with isoamyl alcohol may suitable be used to provide a solvent composition of this invention.

Usually the vegetable fat will contain a mixture of fatty acids of varying hydrocarbon length, and provide an ester with beneficial solvency problems which are not achieved when using one of the fatty acids separately or when used in combination with other solvents.

As a result of using the above described fatty acids or fatty acid mixtures, the solvent composition of this invention may mainly consist of an ester of one single fatty acid, for example C12 lauric acid, or an ester of a mixture of fatty acids with various chain lengths C8-C14 fatty acids, preferably C8-C12 fatty acids. The esters of the present invention may contain isoamyl esters of C16 and/or C18 fatty acids, but usually these esters will be present only in very limited concentration. C16 and C18 fatty acids will usually include saturated and unsaturated fatty acids. Although the use of mixtures of fatty acids may be preferred from an economical point of view, certain applications may require the use of an ester made of one single fatty acid or of a well defined mixture of a limited number of fatty acids.

According to a first preferred embodiment of this invention preferably use is made of a fatty acid mixture which contains at least 80 wt. %, preferably at least 85 wt. %, more preferably at least 90 wt. %, most preferably at least 95 wt. % of lauric acid C12, as isoamyl esters made with such a fatty acid mixture show extremely good oxidation stability. According to another preferred embodiment, use is made of a C14 fatty acid mixture containing at least 80 wt. %, preferably at least 85 wt. %, more preferably at least 90 wt. %, most preferably at least 95 wt. % of C14 fatty acid. According to a further preferred embodiment use is made of a fatty acid mixture which contains 45-80 wt. % of C8 fatty acid, preferably 50-75 wt. %, more preferably 55-75 wt. % ; 25-60 wt. % of C10 fatty acid; preferably 25-55 wt. %, more preferably 35-55 wt. % of C10 fatty acid. This fatty acid mixture will usually contain some C12 and C14 fatty acids, although the concentration of these fatty acids will be quite limited. Each of the C12 and C14 fatty acids will usually be present in a concentration which is not more than 10 wt. %, preferably not more than 7.5 wt. %, more preferably not more than 5 wt. %. Typical concentrations vary from 0.5-5 wt. %, preferably 0.5-3 wt. %. The fatty acid mixtures described above will usually be obtained by selecting specific fractions of a vegetable fat source.

The solvent composition of this invention may further contain the usual additives which facilitate its application for the intended purpose.

Depending on the intended application, the solvent composition of this invention may contain some water. In particular, in cases where the use of solvents with a higher viscosity is preferred, or where it is desired to adapt the viscosity of the solvent to the nature of the envisaged application, the solvent composition of this invention may take the form of an emulsion, having the fatty acid ester as the continuous phase. The viscosity of the solvent composition of this invention may also be adjusted by incorporation of a thickener, for example in those applications where dripping and running of the solvent is to be minimised. Examples of suitable thickeners include polysaccharide derivatives functionalised with alkyl alcohol or ether groups. Suitable examples include methyl cellulose, hydroxyethylcellulose, hydroxypropyl cellulose, corn starch, hydroxyethyl- and hydroxypropyl corn starch.

Although esters of isoamyl alcohol with a C8-C14 fatty acid have good solvent properties, it may be desirable to further improve these solvent properties for specific compounds. In such cases the solvent composition of this invention may contain one or more additional organic solvents, to alter the solvency properties depending on the intended application, and to achieve dissolution of components which otherwise would remain un-dissolved. Suitable solvents include esters of C1-C4 alcohols with C8-C22 fatty acids, C1-C5 esters of lactic acid, C1-C5 esters of C3-C10 dicarboxylic acids, of formic acid, acetic acid, propionic acid. Other suitable solvents include for example isoamyl-, ethyl- or propylacetate, isoamyl-, ethyl- or propylpropionate, isoamyl-, ethyl- or priopyl-butryrate; isoamyl-, ethyl- or propyl-isovalerate; isoamyl-, ethyl- or propyl-laurate or isovalerate esters of fusel oil. However, mixtures of two or more of the afore-mentioned solvents may be used as well. Preferred organic solvents are those which are biodegradable and/or made of renewable products.

Although this will usually not be necessary, the solvent composition may contain one or more surfactants, for example as emulsifying agents. These will usually be present in an amount varying from 0.05 to 5 wt. %, with respect to the total weight of the composition. Any surfactant considered suitable by the skilled person may be employed, such as for example linear and branched fatty alcohol ethoxylates, but preferably those surfactants which are made of renewable materials are used, and more preferably surfactants which are made of renewable materials and which are biodegradable. Examples of surfactants suitable for use with the present invention include glycolipids or fatty acid esters.

Because of its pronounced properties, the solvent composition of this invention, in particular the ester of isoamyl aclohol with a C8-C14 fatty acid shows a higher polarity, it is suitable as a solvent for use with a wider range of products where C16-C22 based esters of isoamyl alcohol would require the use of a co-solvent. The isoamyl alcohol esters contained in the solvent of the present invention will usually have a boiling point of at least 200°C, often above 250°C, which explains their suitability for use in closed spaces.

The solvent composition of this invention is particularly suitable for use as a solvent in ink or coating compositions to be applied on a surface. In that case the ester will usually function as a carrier for the coating, to achieve good spreading of the coating over the surface where it is to be applied. It has been found that the ester of this invention shows a good ability to penetrate porous materials, for example cellulose based materials, for example paper, card etc. Upon application of the ink, the ester will transport the pigment to the surface of the substrate to be imprinted, migrate into the substrate and leave the pigment on the surface. According to another embodiment, the ester will transport the pigment to the surface of the substrate to be imprinted, after which the ester will evaporate and leave the pigment on the surface. The solvent composition of this invention, in particular the ester of isoamyl alchohol with a C8-C14 fatty acid is also suitable for use as ink removal agent, as cleaning agent for dissolving ink, bitumen, paint or resins, as cleaning agent for dissolving tar, as a solvent in dry cleaning applications, as a creep oil, as viscosity reducing agent for plastisol compositions in particular those based on polyvinylchloride.

When used as creep oil, the composition will usually exclusively consist of the ester of isoamyl alcohol with a C8-C14 fatty acid ester.

Therefore, the present invention also relates to the use of esters of isoamyl alchohol with a C8-C14 fatty acid as creep oil, as a solvent in ink or coating compositions, as a carrier for the coating in coating compositions, as a cleaning agent for dissolving ink, bitumen, paint or resins, as a solvent for dissolving tar, as a solvent in dry cleaning applications, as viscosity reducing agent for plastisol compositions, in particular those based on polyvinylchloride.

According to the present invention, tar or bitumen present as such or in or on a substrate may be dissolved by contacting the substrate comprising the tar or bitumen or any other material to be removed, with the solvent composition described above to dissolve the tar or the bitumen or any other material.

The ester of isoamyl alcohol with a C8-C14 fatty acid of the present invention can be produced according to the conventional techniques known to the skilled person. According to one possible production method, isoamylalcohol is caused to react with a lauric fatty acid in the presence of a catalyst. Suitable catalyst are metal organic or acid catalysts, for example acid organic catalysts such as para-toluene sulphonic acid, or inorganic acids such as sulphuric acid. Water is removed from the reaction to improve the conversion of fatty acids and isoamyl alcohol into isoamylester. The isoamylalcohol that is removed with the water is not completely miscible in the liquid phase and can be easily recycled into the reactor.

The invention is further elucidated in the following examples and comparative examples.

Contact angle and pendant-drop measurements were done using a Krüss DSA 100 contact angle measuring device, DSA1 software, DS3210 single direct dosing system, DS3222 multi dosing system. The surface free energy was calculated according to Owens-Wendt-Rabel&Kalble, the work of adhesion and interfacial surface tension were calculated as well. The system was calibrated using water and diodomethane as reference liquids and glass, iron, aluminium and Teflon as solid surface material. Calibration was as follows for water:

**Table 1 : Calibration using water.**

| | Contact angle (°) | Interfacial tension (mN/m) | Disperse component of interfacial tension | Polar component of interfacial tension |
|---|---|---|---|---|
| Glass | 41.4 ± | 72.8 | 21.8 | 51 |
| | 1.68 | | | |
| Iron | 90.0 ± | 72.8 | 21.8 | 51 |
| | 1.35 | | | |
| aluminum | 98.6 ± | 72.8 | 21.8 | 51 |
| | 1.08 | | | |
| Teflon | 107.60 ± | 72.8 | 21.8 | 51 |
| | 2.23 | | | |

**Table 2 : calibration using water.**

| | Total surface energy (mN/m) | Disperse part (mN/m) | Polar part (mN/m) |
|---|---|---|---|
| Glass | 60.15 | 34.20 | 25.95 |
| Iron | 34.32 | 32.44 | 1.88 |
| aluminum | 32.48 | 32.08 | 0.4 |
| Teflon | 16.99 | 16.14 | 0.86 |

**Table 3 : Calibration using diodomethane.**

| | Contact angle (°) | Interfacial tension (mN/m) | Disperse component of interfacial tension | Polar component of interfacial tension |
|---|---|---|---|---|
| Glass | 50.1 ± 1.66 | 50.8 | 50.8 | 0 |
| Iron | 53.3 ± 2.34 | 50.8 | 50.8 | 0 |
| Aluminium | 53.9 ±0.35 | 50.8 | 50.8 | 0 |
| Teflon | 82.7 ± 2.38 | 50.8 | 50.8 | 0 |

**Table 4 : Calibration using diodomethane.**

| | Total surface energy (mN/m) | Disperse part (mN/m) | Polar part (mN/m) |
|---|---|---|---|
| Glass | 60.15 | 34.20 | 25.95 |
| Iron | 34.32 | 32.44 | 1.88 |
| Aluminium | 32.48 | 32.08 | 0.4 |
| Teflon | 16.99 | 16.14 | 0.86 |

### Examples.

The contact angle was measured of the following compounds on glass, iron, aluminium and Teflon as standard testing surfaces:
1. Example 1 : the ester of isoamyl alcohol with a C12 saturated fatty acid.
   The fatty acid mixture used to produce the ester contained more than 98.0 wt. % of C12 fatty acid.
2. Example 2 : the ester of isoamyl alcohol with a fatty acid mixture consisting mainly of C8-C10 saturated fatty acids. The fatty acid mixture used to produce the ester contained 3.0 wt. % of C6 fatty acid, 65.0 wt. % of C8 fatty acid, 45.0 wt. % of C10 fatty acid, 2.0 wt. % of C12 fatty acid and 1.0 wt. % of C14 fatty acid.
3. Comparative example A : isoamyllactate (lactic acid = C₃H₆O₃)
4. Comparative example B: methyl ester of fatty acids obtained by hydrolysing rapeseed oil. The rapeseed oil used contained C16, C18 and C22 fatty acids
5. Comparative example C: isopropyl laurate
6. Comparative example D: silicone oil.

Values for the contact angle of the compounds given below in table 5 on the indicated substrate in °.

**Table 5 : contact angle measurements**

| | Ester / substrate | glass | iron | Aluminium | Teflon |
|---|---|---|---|---|---|
| 1 | Isoamyl alcohol - C12 fatty acid | 7.6 | 14.2 | 10.5 | 31.5 |
| 2 | Isoamyl alcohol - C8-C10 fatty acid | 8.3 | 10.2 | 10.1 | 32.6 |
| A | Isoamyl lactate | 8.7 | 7.9 | 21.2 | 43.7 |
| B | Rapeseed methyl ester | 11.4 | 7.4 | 17.5 | 40.4 |
| C | Isopropyl laurate | 5.2 | 6.6 | 8.5 | 33.7 |
| D | Silicone oil | 0 | 0 | 0 | 7.3 |

From table 5 it can be seen that the contact angle for the isoamyl alcohol esters of examples 1 and 2 according to the invention on glass, iron, aluminium and Teflon, is quite small when compared to isoamyl lactate and rapeseed methyl ester. The smaller the contact angle of a liquid with the surface of a certain material, the better spreading of that liquid on the surface. The small contact angle is indicative of good spreading ability on the surface to which the ester is applied. In general it is believed that liquids which show a contact angle with the envisaged surface of below 15°, are good solvents and show good spreading ability. Therefore the esters of this invention are considered to be good solvents for dissolving materials present on the surface of the test materials mentioned in table 5, while being made of fully renewable raw materials.

**Table 6a: Values for the surface tension (mN/m) and the disperse and polar component of the surface tension on Teflon as contact surface for esters according to the invention.**

| Ester / substrate | Surface tension | Disperse component | Polar component |
|---|---|---|---|
| Isoamy alcohol - C14 fatty acid | 24.6 | | |
| Isoamyl alcohol - C12 fatty acid | 22.76 | 22.22 | 0.54 |
| Isoamyl - C8-C10 fatty acid | 23.06 | 22.56 | 0.50 |
| Isoamyl - C6 fatty acid | 24.1 | | |

**Table 6b: Values for the surface tension (mN/m) and the disperse and polar component of the surface tension on Teflon as contact surface for comparative materials.**

| Ester / substrate | Surface tension | Disperse component | Polar component |
|---|---|---|---|
| Isoamyl lactate | 22.13 | 18.17 | 3.96 |
| Isoamyl stearate | 29.8 | | |
| Isoamyl palmitate | 37.8 | | |
| Isoamyl oleate | 38.5 | | |
| Rapeseed methyl ester | 23.23 | 20.93 | 2.30 |
| Isopropyl laurate | 20.82 | 18.18 | 2.64 |
| Silicone oil | 14.88 | 10.98 | 3.90 |

From table 6a it can be read that the surface tension for the isoamyl alcohol esters according to the invention is in the same order of magnitude often somewhat smaller, than that of the solvents of the comparative examples, (table 6b) which however are not or not entirely produced from renewable materials. The fact that a disperse component is present in the surface tension has the effect that the esters of this invention are capable of developing Van der Waals interactions and of wetting surfaces where Van der Waals interactions play a major role. The fact that also some polar component is present in the surface tension, has the effect that the esters of this invention are also capable of developing polar interactions and of wetting surfaces where polar interactions play a major role.

**Table 7 : Values for work of adhesion (mN/m).**

| | Ester / substrate | glass | iron | Aluminium | Teflon |
|---|---|---|---|---|---|
| 1 | Isoamyl alcohol - C12 fatty acid | 62.62 | 55.71 | 54.33 | 39.23 |
| 2 | Isoamyl - C8-C10 fatty acid | 62.76 | 56.04 | 54.70 | 39.47 |
| A | Isoamyl lactate | 70.13 | 54.01 | 50.80 | 37.92 |
| B | Rapeseed methyl ester | 68.96 | 56.27 | 53.74 | 39.56 |
| C | Isopropyl laurate | 66.42 | 53.03 | 50.34 | 37.26 |
| D | Silicone oil | 58.88 | 43.16 | 40.03 | 30.27 |

The work of adhesion is representative for the adhesion energy to a surface, or in other words the tendency of a material to stick to a certain surface. In particular, the combination of the work of adhesion and contact angle, is representative for the film forming ability of a compound. Film forming ability is an important property for creep oil and anti-corrosion agents which should remain as a film on the surface to be protected. As can be seen from table 7 from the comparison of the work of adhesion observed with the esters of this invention with silicone oil, which is an extremely good creep oil, a composition consisting exclusively of the esters of this invention shows a work of adhesion which is at least comparative to that of silicone oil, often better. This in combination with the fact that the esters of the present invention show a contact angle with the example surfaces of below 15° (table 5), explains the good spreading ability of the esters of this invention, and film forming properties which often were found to be at least as good as those of silicone oil.

When applied to a surface, in particular a metal surface, it has been observed that a thin layer of product remains at least for some time, which gives an at least temporary protection against corrosion. Therefore also the composition of this invention will be suitable for use as an anti-corrosion agent.

**Table 8 : Values for interfacial tension (mN/m)**

| | Ester / substrate | glass | iron | Aluminium | Teflon |
|---|---|---|---|---|---|
| 1 | Isoamyl alcohol - C12 fatty acid | 20.29 | 1.37 | 0.91 | 0.52 |
| 2 | Isoamyl - C8-C10 fatty acid | 20.45 | 1.34 | 0.84 | 0.58 |
| A | Isoamyl lactate | 12.15 | 2.44 | 3.81 | 1.2 |
| B | Rapeseed methyl ester | 14.42 | 1.28 | 1.97 | 0.66 |
| C | Isopropyl laurate | 14.55 | 2.11 | 2.95 | 0.55 |
| D | Silicone oil | 16.55 | 6.04 | 7.33 | 1.60 |

The interfacial tension indicates whether or not a compound easily leaves the surface of a certain material or not. The higher the interfacial tension the better the compound may be rinsed off from the surface.

From table 8 it appears that the interfacial tension of the esters of the present invention on glass is relatively high, which indicates that rinsing off from glass will be relatively easy. From table 8 it further appears that interfacial tension on a metal surface such as iron, aluminium is small as well as on teflon, indicating that the esters of this invention show relatively good affinity for these materials, a good ability of penetrating between the metal surface and materials adhered to the metal surface, for example paint or other organic compounds sticking to the surface, and a good ability of loosening adhesion of such materials from the metal surface. The small interfacial tension is also important in the application of the esters of this invention as creep oil. This can most probably be explained by the observation that the dispersive component of the surface tension for the esters according to the invention is relatively higher in comparison with the prior art compositions.

From the combination of table 5 and 8 it appears that the esters of the present invention show a small surface contact angle on the materials that have been tested which will result in good spreading ability, in combination with small interfacial tension which is indicative of good spreading ability on the surface concerned. The combination of both properties renders the esters of the present invention particularly suitable for use as creep oils.

### Kauri-butanol value.

The Kauri-butanol value of a solvent represents the relative strength of a solvent, in particular the ability of a solvent of dissolving materials. The Kauri-butanol value is in particular the volume in ml at 25°C of the solvent, required to produce a defined degree of turbidity when added to 20 g of a standard stock solution of kauri resin in 1-butanol. The kauri resin is a fossil copal. Kauri resin is readily soluble in 1-butanol but is not soluble in may other solvents. As a result the resin solution will tolerate only a limited amount of dilution. Better solvents, for example toluene, can be added in larger quantities and thus have a high Kauri butanol value, weaker solvents like hexane can be added in smaller quantities and will have a small Kauri butanol value. The Kauri butanol value (Kb value) was determined according to ASTM D1133 standardized test. Mild solvents have a kb value in the tens and twenties, powerful solvents have ratings in the low hundreds.

**Table 9 : Kauri butanol values of several solvents.**

| Solvent | Kb value in ml* | Flash point °C |
|---|---|---|
| Cyclohexane | 54.3 | |
| Dichloromethane | 136 | |
| n-heptane | 25.4 | |
| n-hexane | 26.5 | |
| D-limonene | 68 | |
| Toluene | 105 | |
| Trichloroethylene | 129 | |
| White spirit | 36 | |
| Methyl C8-C10 fatty acid ester | 107 | 80 |
| Methyl C12 fatty acid ester | 75 | 140 |
| Ethyl hexyl oleate | 51 | 170 |
| Isopropyl laurate | 56 | 110 |
| C1-C4 ester of C16-C20 fatty acid | 51 | 93 |

**Table 9 - continued**

| Solvent | Kb value in ml* | Flash point °C |
|---|---|---|
| Isoamyl oleate | 38.5 | |
| Isoamyl palmitate | 37.8 | |
| Isoamyl stearate | 35 | |
| Isoamyl cocoate | 49 | |
| Isoamyl alcohol - C12 fatty acid | 51 | 170 |
| Isoamyl alcohol - C8-C10 fatty acid | 71.3 | |
| Isoamyl alcohol - C6 fatty acid | 88.7 | |

From the table given above it appears that the ester of the present invention (Isoamyl alcohol - C12 fatty acid) has a Kb value which is within the range of Kb values for relatively good solvents and that it has a relatively high flash point of 170°C, which renders it suitable for use in closed spaces.

### Biodegradability tests.

The biodegradability was tested of the ester of isoamyl alcohol with C8-C10 fatty acid and with lauric acid (C12) as a test material, under aerobic conditions using the CO₂ evolution test as described below. The biodegradability was tested using sodium benzoate as ready biodegradable reference material.

Biodegradability of the ester was tested by incubating together in a closed glass vessel with a volume of 2500 ml, under controlled conditions: a bacterial inoculum (30 mg/l of suspended solids) which originates from the activated sludge of a sewage treatment plant, mineral nutrients and the ester as the sole source of organic carbon. The glass vessel contained a total volume of test solution of 2000 ml and was aerated with CO₂-free air and fitted to gas-absorption bottles containing 125 ml of 0.13 M KOH. Incubation took place in a temperature-controlled dark room at 22 ± 2 °C.

The activated sludge was used after sampling from the treatment plant without adaptation. However, the sludge was preconditioned for 2 days (aerated but not fed) to reduce the amount of CO₂ produced by the blank controls. Prior to the test the sludge was washed twice with tap water. After centrifugation the sludge, at a concentration being tenfold the final concentration to be achieved for the test, was suspended in test medium as described in Table 10. The test and reference material, respectively, were applied by direct addition to give a final test concentration of about 20 mg/l with respect to the total organic carbon (TOC). For each test series the following number of test flasks were set up:
T: Test suspension containing inoculum, test medium and ester (three replicates)
B: Inoculum blank containing inoculum and test medium (three replicates)
R: Procedure control containing inoculum, test medium and sodium benzoate as
   ready biodegradable reference material (three replicates).

The test vessels were stirred (about 100 r.p.m.) and aerated with synthetic CO₂-free air for a maximum test period of 28 days. The air leaving the individual vessels was passed through gas-absorption bottles filled with KOH. The pH-value was checked at the beginning and at the end of the test and adjusted to pH 7.4 (± 0.2) with NaOH or HCl, if necessary. The biodegradation of the test material was followed by CO₂ measurements at frequent intervals to allow the assessment of the 10-d window. The trapped CO₂ was determined as inorganic carbon (IC).

The biodegradation of the ester was monitored by the evolution of carbon dioxide. The measurements were taken at frequent time intervals over a period of 28 days. The amount of carbon dioxide produced by the microbial population during biodegradation of the test substance (corrected for the value in the blank control) was expressed as percentage of the theoretical value (ThCO₂) and served as the measure for the extent of biodegradation. The theoretical value is based on the determination of the total organic carbon (TOC) of the test substance.

**Table 10 : CO2 produced by the test units, the inoculum blank and the corresponding degradation data**

| | **Inoculum** | **Test unit no. 1** | | **Test unit no. 2** | | |
|---|---|---|---|---|---|---|
| | **blank*** | **containing the ester of isoamyl alcohol with lauric acid (C12)** | | **containing the ester of isoamyl alcohol with lauric acid (C12)** | | |
| **Time (days)** | **Total CO₂ release in test sample (mg IC/l)** | **Total CO₂ release in test sample (mg IC/l)** | **Degradation (%) **** | **Total CO₂ release in test sample (mg IC/l)** | **Degradation (%) **** | **Mean Degradation of no. 1+2 (%)** |
| 0 | 0 0 | 0 0 | 0 0 | 0 0 | 0 0 | 0 0 |
| 1 | 0 0 | 0 1 | 0 3 | 0 1 | 0 5 | 0 4 |
| 4 | 0.6 | 4.3 | 18.7 | 3.4 | 14.3 | 16.5 |
| 7 | 2.0 | 10.9 | 44.2 | 8.2 | 31.1 | 37.7 |
| 11 | 4.2 | 18.8 | 72.2 | 16.9 | 63.0 | 67.6 |
| 14 | 4.8 | 23.1 | 90.9 | 21.5 | 83.1 | 87.0 |
| 18 | 5.0 | 25.1 | 99.5 | 23.0 | 89.4 | 94.4 |
| 21 | 5.7 | 25.9 | 100.5 | 24.1 | 92.0 | 96.2 |
| 25 | 6.3 | 26.7 | 100.9 | 25.8 | 97.0 | 99.0 |
| 28 | 6.5 | 26.9 | 101.4 | 26.2 | 98.4 | 99.9 |

| | | | | | | |
|---|---|---|---|---|---|---|
| * Average of two replicates ** The calculation is based on an organic carbon concentration in mgl/of **20.2** (test unit no.1) **20.1** (test unit no. 2) | | | | | | |

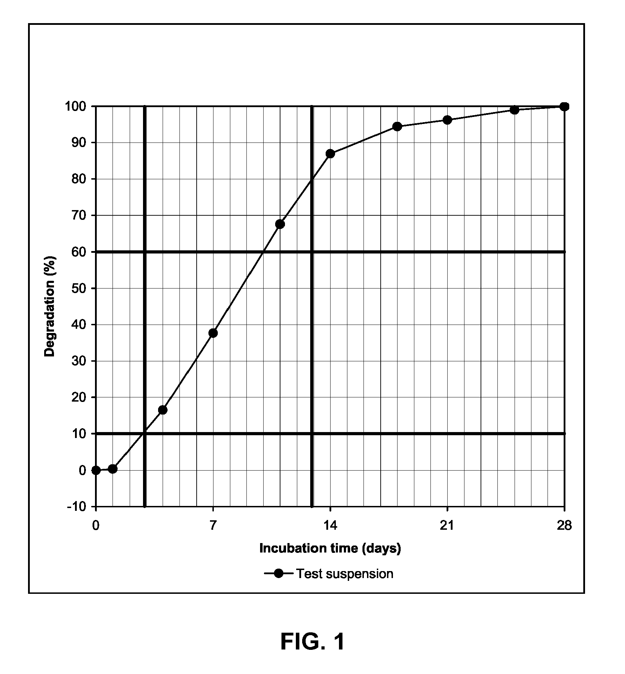

Figure 1 shows the degradation curve for the ester of isoamyl alcohol with lauric acid. The bold lines indicate the 10-day window from the point of time where 10% of material had been biodegraded.

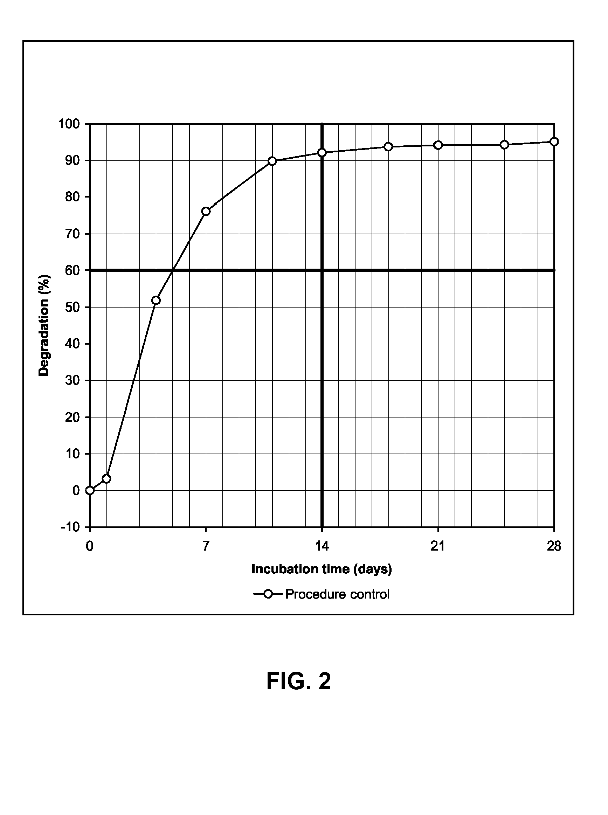

Figure 2 shows the degradation curve for reference material sodium benzoate. The bold line indicate the minimum pass level of 60 % degradation for the procedure control

**Table 11 : CO₂ produced by the test units, the inoculum blank and the corresponding degradation data**

| | **Inoculum** | **Test unit no. 1** | | **Test unit no. 2** | | |
|---|---|---|---|---|---|---|
| | **blank *** | **containing the ester of isoamyl alcohol and C8-C10 fatty acid.** | | **containing the ester of isoamyl alcohol and C8-C10 fatty acid** | | |
| **Time (days)** | **Total CO₂ release in test sample (mg IC/l)** | **Total CO₂ release in test sample (mg ICl/)** | **Degradation (%)**** | **Total CO₂ release in test sample (mg IC/I)** | **Degradation (%)**** | **Mean Degradation of no. 1+2 (%)** |
| 0 | 0.0 | 0.0 | 0.0 | 0.0 | 0.0 | 0.0 |
| 1 | 0.0 | 0.4 | 2.3 | 0.1 | 0.5 | 0.9 |
| 3 | 1.1 | 4.2 | 15.8 | 0.1 | 4.7 | 5.6 |
| 7 | 4.0 | 15.0 | 55.2 | 15.9 | 59.9 | 57.5 |
| 10 | 5.6 | 20.2 | 72.6 | 22.0 | 81.5 | 77.1 |
| 14 | 7.6 | 24.5 | 84.6 | 26.6 | 94.9 | 89.8 |
| 17 | 8.4 | 25.8 | 86.9 | 29.6 | 105.9 | 96.4 |
| 21 | 9.7 | 26.2 | 82.9 | 28.6 | 94.5 | 88.7 |
| 24 | 10.1 | 27.3 | 86.0 | 29.4 | 96.1 | 91.0 |
| 28 | 10.3 | 27.7 | 87.1 | 29.7 | 97.1 | 92.1 |

| | | | | | | |
|---|---|---|---|---|---|---|
| * Average of two replicates ** The calculation is based on an organic carbon concentration in mgl/of **20.0** (test unit no.1) **20.0** (test unit no. 2) | | | | | | |

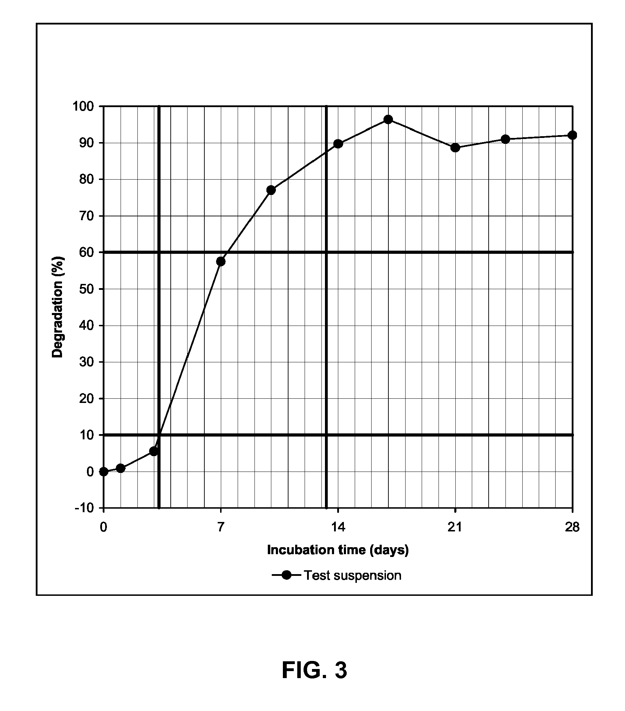

Figure 3 shows the degradation curve for the ester of isoamyl alcohol with C8-C10 fatty acid. The bold lines indicate the 10-day window from the point of time where 10% of material had been biodegraded.

### Cleaning performance test.

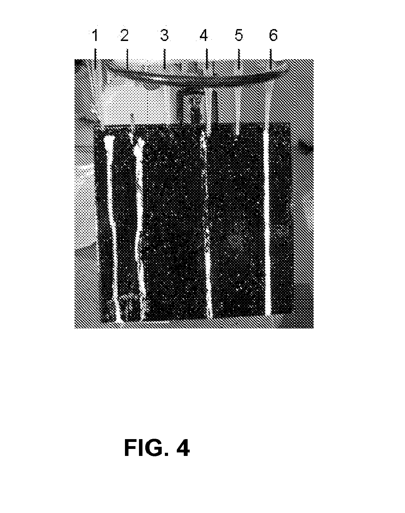

The ability to clean a fine uniform layer of bitumen on top of the surface of white glazed tiles of the solvents summarized below in table was determined. Thereto, the tiles were positioned in an almost vertical position and solvent was applied along the top of the tile using a pipette which contained 2 ml of solvent. Every pipette was progressively emptied in 3 minutes. The products were then left to react with the dry bitumen layer for 10 minutes, and then sprayed from the tile with water. The mixture of water, bitumen and cleaning agent sliding from the tile was then collected at the base of the tile. Droplets of the solvent will easily glide along the surface, cleaning the tile (figure 4). The cleaning power of the products was measured visually as a function of time. All solvents except for limonene were mixed with ethoxylated sorbitan mono-oleate surfactant in order to facilitate rinsing of with water.

| Nr | Product | Amount (ml) | Result |
|---|---|---|---|
| 1 | Limonene | 2.07 | Moderate |
| 2 | Isoamyllaurate + 5% ethoxylated sorbitan mono-oleate | 2.04 | Good |
| 3 | Ethoxylated isoamylalcohol + 5% ethoxylated sorbitan mono-oleate | 2 | Poor |
| 4 | Isoamyl-lactate + 5% ethoxylated sorbitan mono-oleate | 2.05 | Moderate |
| 5 | Di-isoamyl succinate + 5% ethoxylated sorbitan mono-oleate | 2.04 | Poor |
| 6 | Isoamyl C8/C10 + 5% ethoxylated sorbitan mono-oleate | 2.01 | Excellent |

## Claims

1. A solvent composition comprising an ester of isoamyl alcohol with at least one C8-C14 fatty acid or a mixture of two or more of those fatty acids.

2. A solvent composition according to claim 1, wherein the C8-C14 fatty acids originate from a vegetable fat.

3. A solvent composition according to claim 1 or 2, wherein the vegetable fat is selected from the group of coconut oil or palm kernel oil, one or more fractions of the afore-mentioned oils, or a mixture of two or more of the afore-mentioned components.

4. A solvent composition according to claim 3, **characterised in that** the vegetable fat has been subjected to at least a partial hydrogenation.

5. A solvent composition as claimed in any one of claims 1-4, **characterised in that** the fatty acid part of the isoamyl ester contains at least 80 wt. %, preferably at least 85 wt. %, more preferably at least 90 wt. %, most preferably at least 95 wt. % of lauric acid.

6. A solvent composition as claimed in any one of claims 1-4, **characterised in that** the fatty acid part of the isoamyl ester contains at least 80 wt. %, preferably at least 85 wt. %, more preferably at least 90 wt. %, most preferably at least 95 wt. % of C14 fatty acid.

7. A solvent composition as claimed in any one of claims 1-4, **characterised in that** the fatty acid part of the isoamyl esters contains
- 45-80 wt. % of C8 fatty acid, preferably 50-75 wt. %, more preferably 55-75 wt. % ;
- 25-60 wt. % of C10 fatty acid, preferably 25-55 wt. %, more preferably 35-55 wt. % of C10 fatty acid.

8. A solvent composition according to any one of claims 1-7, wherein isoamyl alcohol comprises at least one component selected from the group of 3-methyl-1-butanol, 2-methyl-1-butanol or a mixture of two or more of the afore mentioned components.

9. A solvent composition according to any one of claims 1-8, wherein the isoamyl alcohol originates from fusel oil.

10. A solvent composition according to claim 9, wherein the fusel oil comprises 40-60 wt. % of at least one component selected from the group of 3-methyl-1-butanol, 2-methyl-1-butanol or a mixture thereof, 3-15 wt.% of % ethanol, 5-20 wt.% of n-propanol, 10-20 wt.% of i-butanol and 5-20% miscellaneous alcohols and water.

11. A solvent composition according to any one of claims 1-10, further comprising at least one component selected from the group of an additional solvent, a thickener, a surfactant, water, or a mixture of two or more thereof.

12. Use of the solvent composition of any one of claims 1-11 for dissolving a component selected from the group of ink, bitumen, paint, thermosetting or thermoplastic resin..

13. Use of the solvent composition of any one of claims 1-11 for producing an ink composition containing at least one pigment supported and the solvent composition according to any one of claims 1-11.

14. Use of the solvent composition of any one of claims 1-11 for producing a coating composition containing at least one coating material and an ester according to any one of claims 1-11 as a carrier material for the coating.

15. Use of the solvent composition of any one of claims 1-11 as an anti-corrosion agent.

16. Use of the solvent composition of any one of claims 1-11 as creep oil.
